# FASCICULE DE BREVET EUROPEEN

(11) **EP 4 088 975 B1**
(45) Date de publication et mention de la délivrance du brevet: **14.08.2024**
(21) Numéro de dépôt: 22172313.3
(22) Date de dépôt: 09.05.2022
(51) Int. Cl.: B60R 11/04

(54) **STRUCTURE AMELIOREE DE CACHE POUR CAMERA EMBARQUEE SUR UN VEHICULE**
VERBESSERTE STRUKTUR ZUR ABDECKUNG EINER KAMERA AN BORD EINES FAHRZEUGS
IMPROVED COVER STRUCTURE FOR A CAMERA PLACED ON BOARD A VEHICLE

(30) Priorité: 12.05.2021 FR 2105024
(43) Date de publication de la demande: 16.11.2022
(73) Titulaire: Renault s.a.s, 92100 Boulogne Billancourt (FR)
(72) Inventeur: CALAIS, Valère, 78084 guyancourt cedex (FR)

(56) Documents cités:
- EP-A1- 0 224 415
- EP-A1- 3 800 504
- EP-A2- 2 476 947
- WO-A2-2009/109263
- DE-A1- 102004 058 683
- FR-A1- 3 057 500

## Description

L'invention concerne une structure de cache pour une caméra embarquée sur un véhicule et faisant face à une vitre de pare-brise. La structure de cache selon l'invention permet de réduire de manière efficace les réflexions diffuses et spéculaires des rayonnements provenant de l'extérieur du véhicule.

Il est fréquent d'installer une caméra embarquée à l'intérieur d'un véhicule tel qu'une automobile. La caméra embarquée est généralement fixée en hauteur, à proximité de la vitre du pare-brise afin d'obtenir des images de l'avant du véhicule pendant le trajet. Afin d'éviter que des reflets provenant des éléments internes de l'habitacle ne soient reçus par la caméra, on équipe celle-ci d'une structure de cache l'isolant de l'habitacle : la caméra ne « voit » ainsi que ce qui provient du pare-brise. Cependant, le pare-brise génère également des reflets qui perturbent le fonctionnement de la caméra. En effet, les rayons externes (par exemple le rayonnement du soleil) qui traversent le pare-brise sont réfléchis une première fois par la structure de cache puis une deuxième fois par le pare-brise qui les renvoie en grande partie vers la caméra. Afin de réduire la puissance lumineuse réfléchie par la surface de la structure de cache vers la caméra, la face interne de la structure de cache peut présenter une surface la plus absorbante possible résultant de sa couleur (couleur la plus sombre possible, généralement noire), de sa structure (surface grainée ou recouverte de moquette, de feutre, de peinture absorbante, etc.) ou d'une combinaison des deux. Toutefois, en pratique, la quantité de lumière reste la même car la surface ainsi traitée, bien que limitant les réflexions spéculaires, crée des réflexions diffuses : la caméra continue ainsi de voir ces réflexions mais réparties de manière homogène.

Afin de tenter de réduire ces réflexions, il a aussi été proposé de texturer la surface de la structure de cache avec un motif en escalier qui est concentrique, avec comme centre la caméra, ou glissé suivant la direction longitudinale du véhicule (pour une caméra située derrière le pare-brise). L'objectif d'une telle texture est que les réflexions spéculaires, générées par une première rencontre des rayons externes avec la surface texturée, rencontrent la texture afin d'augmenter davantage la réflexion diffuse. Cette solution amplifie cependant les défauts de la première solution. Le document EP 3 800 504 A1 divulgue un exemple d'une structure de cache pour une caméra d'un véhicule automobile.

La présente invention a pour objectif de fournir une structure de cache de caméra embarquée capable d'empêcher efficacement la lumière extérieure réfléchie par une vitre de pénétrer dans l'objectif de la caméra.

A cet effet, un premier objet de l'invention concerne une structure de cache pour une caméra embarquée de véhicule automobile positionnée en regard d'une vitre du véhicule, ladite structure de cache comprenant une pluralité de parois opaques définissant un volume présentant une première ouverture destinée à être fermée par la vitre du véhicule en position d'utilisation de la structure de cache et une deuxième ouverture destinée à être située en regard d'une lentille de ladite caméra dans la position d'utilisation. Selon l'invention, au moins une paroi définissant ledit volume présente une face interne réfléchissante pourvue d'éléments de rétroréflexion catadioptriques réfléchissant un faisceau lumineux incident dans la direction d'où ce dernier provient, quelque soit l'angle d'incidence dudit faisceau.

Une telle surface réfléchissante forme ainsi un catadioptre : les réflexions spéculaires des rayons incidents sur la surface repartent dans la même direction que les rayons incidents suite à des réflexions sur les éléments de rétroréflexion catadioptriques de cette surface. Comme les réflexions spéculaires de ces rayons, qui proviennent de faisceaux lumineux ayant traversé la vitre du véhicule, repartent en suivant le même chemin optique qu'à l'aller, ils ne peuvent être réfléchis par la vitre, et ceci, quelque soit l'angle d'incidence de ces rayons par rapport à la surface réfléchissante. Les réflexions diffuses des rayons incidents sont quant-à-elles absorbées en grande partie par les éléments de rétroréflexion catadioptriques qui se comportent comme des pièges à lumière.

La structure particulière de la surface réfléchissante permet ainsi de réduire la quantité de lumière parasite détectée par la caméra due aux réflexions diffuses. Ceci permet d'améliorer le contraste de la caméra, d'améliorer la dynamique de l'image et par conséquent les performances de détection.

Une structure de cache peut comprendre au moins trois parois, une paroi inférieure s'étendant depuis une partie inférieure de la deuxième ouverture du volume dans la position d'utilisation de la structure de cache, généralement horizontalement ou sensiblement horizontalement, et deux parois latérales situées de part et d'autre de la paroi inférieure et s'étendant chacune le long d'un bord de la paroi inférieure depuis une partie latérale de la deuxième ouverture du volume, généralement aussi verticalement ou sensiblement verticalement. La deuxième ouverture du volume pourra éventuellement être définie dans une quatrième paroi depuis laquelle pourront s'étendre les parois latérales et inférieure. Le plus souvent, le volume défini par la structure de cadre destiné à isoler la caméra des perturbations lumineuses provenant de l'habitacle du véhicule, sera formé de ces trois ou quatre parois.

Avantageusement, ladite au moins une paroi présentant la face interne réfléchissante peut ainsi être choisie parmi :
- une paroi inférieure s'étendant, dans la position d'utilisation de la structure de cache, depuis une partie inférieure de la deuxième ouverture du volume, optionnellement depuis un bord inférieur d'une paroi définissant ladite deuxième ouverture,
- une paroi latérale s'étendant le long d'un bord de la paroi inférieure depuis une partie latérale de la deuxième ouverture du volume, optionnellement depuis un bord latéral d'une paroi définissant ladite deuxième ouverture,
- optionnellement une paroi définissant la deuxième ouverture du volume.

On pourra avantageusement prévoir les éléments de rétroréflexion catadioptriques sur la surface de la paroi la plus grande de la structure de cache. Ainsi, ladite au moins une paroi présentant la face interne réfléchissante peut être une paroi présentant une surface supérieure à la surface des autres parois de ladite structure de cache définissant ledit volume.

Avantageusement, ladite au moins une paroi présentant la face interne réfléchissante peut être une paroi inférieure s'étendant depuis un bord inférieur de la paroi percée dans la position d'utilisation de la structure de cache. Cette paroi est généralement la paroi de plus grande surface.

Avantageusement, une seule paroi définissant le volume peut présenter une face interne réfléchissante. Il est alors possible de réaliser la structure de cache d'une seule pièce en matériau polymère par moulage.

On pourra néanmoins prévoir des éléments de rétroréflexions catadioptriques sur la face interne de plus d'une paroi définissant le volume, voire de la totalité des parois. Ces parois peuvent alors être réalisées également en matériau polymère. La structure de cache pourra alors être réalisée en deux ou plusieurs parties assemblées par collage, vissage, soudage, par coopération d'éléments mâle/femelle ou par toute autre méthode appropriée.

Avantageusement, les éléments de rétroréflexion catadioptriques peuvent être des trièdres trirectangles concaves à arêtes orthogonales. Ces éléments sont généralement disposés les uns à côté des autres de manière contigüe.

Avantageusement, les éléments de rétroréflexion catadioptriques peuvent s'étendre sur la totalité de la surface de la face interne de ladite au moins une paroi, ou sur au moins 90% de cette surface, avantageusement sur au moins 95%, voire au moins 98% de cette surface.

De préférence, ces éléments de rétroréflexion catadioptriques ne sont pas recouverts d'une paroi plane. Autrement dit, la surface de la face interne réfléchissante n'est pas lisse du fait des aspérités formées par les éléments de rétroréflexion catadioptriques.

La structure de cache de l'invention pourra être fixée de manière conventionnelle soit à une paroi du véhicule, soit à un support de caméra. Elle pourra à cet effet être pourvue d'éléments de fixation appropriés.

L'invention concerne également un véhicule automobile comprenant une caméra embarquée équipée d'une lentille située en regard d'une vitre du véhicule et une structure de cache selon l'invention, dans lequel la deuxième ouverture est située en regard de la lentille de la caméra et la structure de cache est fixée à la vitre qui ferme la première ouverture.

On pourra notamment conformer la structure de cache de sorte que le volume défini par la structure de cache et fermé par la vitre n'interfère pas avec le cône de vision de la caméra lorsque la lentille de la caméra est en regard de la vitre. Ce type de caméra embarqué est généralement une caméra avant, située derrière le pare-brise du véhicule. L'invention peut toutefois s'appliquer à toute caméra embarquée disposée derrière une vitre de véhicule.

L'invention est maintenant décrite en référence aux dessins annexés, non limitatifs, dans lesquels :
[Fig. 1] La figure 1 représente une vue en perspective d'une structure de cache selon un mode de réalisation de l'invention.
[Fig. 2] La figure 2 représente schématiquement une vue de côté de l'agencement d'une structure de cache selon l'invention et d'une caméra par rapport au pare-brise d'un véhicule.
[Fig. 3] La figure 3 représente schématiquement un agrandissement de la surface de la face interne réfléchissante de la paroi représentée figure 2.

Dans la présente description, les termes avant, arrière, supérieur, inférieur, font référence aux directions avant et arrière du véhicule, lorsque la structure de cache est montée sur le véhicule. Les axes X, Y, Z, correspondent respectivement à l'axe longitudinal (d'avant en arrière), transversal et vertical du véhicule, ce dernier reposant sur le sol. La direction verticale correspond ainsi à la direction de la gravité.

Par sensiblement horizontal, longitudinal ou vertical, on entend une direction/un plan formant un angle d'au plus ±20°, voire d'au plus ±10° ou d'au plus ±5°, avec une direction/un plan horizontal, longitudinal ou vertical.

Par sensiblement parallèle, perpendiculaire ou à angle droit, on entend une direction/un angle s'écartant d'au plus ±20°, voire d'au plus ±10° ou d'au plus ±5° d'une direction/d'un plan parallèle, perpendiculaire ou d'un angle droit.

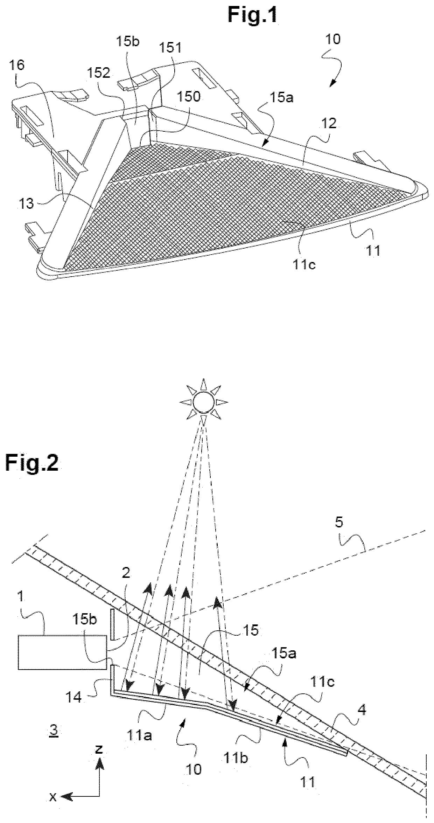

La figure 1 représente une structure de cache 10 pour une caméra embarquée 1 de véhicule automobile. Tel que visible sur la figure 2, une telle structure de cache 10 est positionnée de manière à protéger la lentille 2 d'une caméra embarquée 1 des rayonnements provenant de l'intérieur de l'habitacle 3. Cette caméra 1 est positionnée en regard du pare-brise 4 du véhicule, de sorte que le cône de vision 5 de la caméra puisse traverser, en particulier entièrement, le pare-brise 4.

La structure de cache 10 comprend plusieurs parois opaques définissant un volume 15. Dans l'exemple de la figure 1, trois parois 11, 12, 13 sont prévues, une quatrième paroi 14 peut être prévue tel que représenté figure 2. Ce volume 15 présente une première ouverture 15a destinée à être fermée par le pare-brise 4 du véhicule dans la position d'utilisation de la structure de cache représentée figure 2, et une deuxième ouverture 15b destinée à être située en regard de la lentille 2 de la caméra 1 dans cette position d'utilisation. Avantageusement, ce volume 15 est dimensionné de sorte que les parois 11-13 (ou 11-14) n'interfèrent pas avec le cône de vision 5 de la caméra 1. En raison de leur opacité, ces parois bloquent les rayonnements lumineux provenant de l'intérieur de l'habitacle.

Par « paroi opaque », on entend ainsi une paroi qui bloque le passage des faisceaux lumineux. Cette opacité peut être obtenue par la réalisation de la paroi en un matériau opaque ou par l'application d'un revêtement opaque sur au moins une face de la paroi, le plus souvent la face externe, autrement dit la face située du côté de l'habitacle 3 en position d'utilisation. De préférence, la face interne de chacune des parois définissant le volume sera également opaque afin de limiter les réflexions.

Dans l'exemple représenté figure 1, la structure de cache 10 comprend une paroi inférieure 11 s'étendant, dans la position d'utilisation de la structure de cache, depuis une partie inférieure de la deuxième ouverture du volume 15b, ici depuis un bord inférieur 150 de cette deuxième ouverture. Elle comprend en outre deux parois latérales 12, 13 s'étendant chacune depuis une partie latérale de la deuxième ouverture 15b, ici depuis un bord latéral 151, 152 respectivement de cette dernière.

La structure de cache 10 de l'exemple représenté figure 2 comprend également des parois inférieure 11 et latérales 12, 13 (non représentées) et comprend en plus une paroi 14 définissant la deuxième ouverture 15b du volume. Dans ce mode de réalisation, ce sont donc des bords inférieur et latéraux de cette paroi percée 14 qui sont reliés aux parois inférieure 11 et latérales 12, 13 respectivement.

Typiquement, les parois latérales 12, 13, voire la paroi percée 14, s'étendent sensiblement verticalement. La paroi inférieure 11 s'étend sensiblement horizontalement depuis la deuxième ouverture 15b vers le pare-brise. Elle pourra notamment ne pas être complètement plane tel que représenté sur la figure 2 sur laquelle on distingue deux portions 11a, 11b inclinées l'une par rapport à l'autre, ces portions formant un angle par rapport à un plan horizontal qui est de plus en plus grand depuis la deuxième ouverture 15b vers la vitre 4. La partie de la structure de cache 10 formée des parois 11-13 ou 11-14 présente ainsi une forme générale concave dont la concavité est fermée par le pare-brise 4 dans sa position d'utilisation (fig. 2).

Bien entendu, la présente invention n'est pas limitée par un nombre de parois définissant le volume, ni par la forme et l'agencement relatif des différentes parois pourvu que le volume ouvert ainsi défini présente une première ouverture apte à être fermée par une vitre d'un véhicule et une deuxième ouverture destinée à être positionnée en regard de la lentille 2 d'une caméra. On notera que la structure de cache 10 selon l'invention peut être positionnée par rapport à la caméra de sorte que la partie de la caméra portant la lentille vienne s'encastrer dans la deuxième ouverture 15b dimensionnée de manière appropriée.

Typiquement, la structure de cache 10 peut présenter une platine de fixation 16 pour sa fixation soit à une paroi intérieure de l'habitacle, soit à un support de caméra.

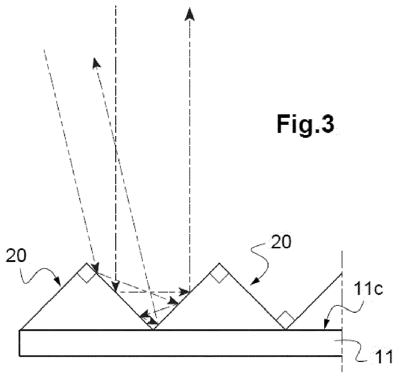

Selon l'invention, la face interne 11c de la paroi 11 forme une face interne réfléchissante pourvue d'éléments de rétroréflexion catadioptriques 20 qui réfléchissent un faisceau lumineux incident dans la direction d'où ce dernier provient, quelque soit l'angle d'incidence dudit faisceau, tel qu'on peut le voir sur les figures 2 et 3.

Par « face interne », on entend ici les faces des parois qui sont situées du côté du volume défini par les parois, autrement dit du côté de la vitre 4 en position d'utilisation. Il s'agit donc d'une face susceptible de recevoir des rayons lumineux qui ont traversé le pare-brise 4 lorsque la structure de cache 10 est dans la position d'utilisation.

Dans l'exemple représenté, seule la face interne 11c de la paroi inférieure 11 est pourvue de ces éléments de rétroréflexion catadioptriques 20. Cette paroi 11 est en effet celle qui présente la plus grande surface et qui reçoit donc la plus grande quantité de lumière en provenance du pare-brise. Son traitement permet donc de diminuer de manière notable les réflexions diffuses vues par la caméra. En outre, la réalisation de ces éléments de rétroréflexion catadioptriques 20 sur une seule des parois permet de réaliser la structure de cache d'une seule pièce par moulage d'un matériau polymère grâce à un outillage de moulage simple.

Bien que cela soit plus coûteux et complexe, on pourrait néanmoins envisager de prévoir des éléments de rétroréflexion catadioptriques sur plus d'une surface des parois 11-13 ou 11-14, en réalisant la structure en deux ou plusieurs parties assemblées ultérieurement les unes aux autres, ou encore en assemblant une plaque d'éléments de rétroréflexion catadioptriques sur une face interne initialement lisse d'une paroi ou en utilisant un outil de moulage avec des mouvements internes supplémentaires.

On pourra utiliser des éléments de rétroréflexion catadioptriques 20 en forme de trièdres trirectangles concaves à arêtes orthogonales (autrement dit en « coin de cube » dont la concavité est dirigée vers le volume 15). De tels éléments de rétroréflexion peuvent être facilement réalisés par moulage et agencés les uns à côté des autres pour couvrir la totalité ou quasi-totalité de la surface de la face interne.

On pourra éventuellement prévoir de recouvrir la surface de la face interne 11c réfléchissante de la paroi 11 d'un revêtement brillant pour améliorer la réflexion des rayons.

De manière générale, l'invention permet ainsi d'améliorer de manière simple l'efficacité d'une structure de cache d'une caméra embarquée.

## Revendications

1. Structure de cache (10) pour une caméra embarquée (1) de véhicule automobile positionnée en regard d'une vitre (4) du véhicule, ladite structure de cache comprenant une pluralité de parois opaques (11-14) définissant un volume (15) présentant une première ouverture (15a) destinée à être fermée par la vitre (4) du véhicule en position d'utilisation de la structure de cache et une deuxième ouverture (15b) destinée à être située en regard d'une lentille (2) de ladite caméra (1) dans la position d'utilisation, **caractérisée en ce qu'**au moins une paroi (11) définissant ledit volume (15) présente une face interne réfléchissante (11c) pourvue d'éléments de rétroréflexion catadioptriques (20) réfléchissant un faisceau lumineux incident dans la direction d'où ce dernier provient, quelque soit l'angle d'incidence dudit faisceau.

2. Structure de cache (10) selon la revendication 1, **caractérisée en ce que** ladite au moins une paroi présentant la face interne réfléchissante est une paroi présentant une surface supérieure à la surface des autres parois de ladite structure de cache définissant ledit volume.

3. Structure de cache (10) selon la revendication 1 ou 2, **caractérisée en ce que** ladite au moins une paroi présentant la face interne réfléchissante est choisie parmi :
- une paroi inférieure (11) s'étendant, dans la position d'utilisation de la structure de cache, depuis une partie inférieure de la deuxième ouverture du volume, optionnellement depuis un bord inférieur d'une paroi (14) définissant ladite deuxième ouverture (15b),
- une paroi latérale (12, 13) s'étendant le long d'un bord de la paroi inférieure depuis une partie latérale de la deuxième ouverture (15b) du volume, optionnellement depuis un bord latéral d'une paroi (14) définissant ladite deuxième ouverture,
- optionnellement une paroi (14) définissant la deuxième ouverture (15b) du volume.

4. Structure de cache (10) selon l'une quelconque des revendications 1 à 3, **caractérisée en ce qu'**une seule paroi (11) définissant le volume (15) présente une face interne réfléchissante et **en ce que** la structure de cache est réalisée d'une pièce en matériau polymère moulé.

5. Structure de cache (10) selon l'une quelconque des revendications 1 à 4, **caractérisée en ce que** les éléments de rétroréflexion catadioptriques (20) sont des trièdres trirectangles concaves à arêtes orthogonales.

6. Structure de cache (10) selon l'une quelconque des revendications 1 à 5, **caractérisée en ce que** les éléments de rétroréflexion catadioptriques (20) s'étendent sur la totalité de la surface de la face interne de ladite au moins une paroi.

7. Véhicule automobile comprenant une caméra embarquée (1) équipée d'une lentille (2) située en regard d'une vitre (4) du véhicule et une structure de cache (10) selon l'une quelconque des revendications précédentes, dans lequel la deuxième ouverture (15b) est située en regard de la lentille (2) de la caméra et la structure de cache (10) est fixée à la vitre (4) qui ferme la première ouverture (15a).

## Patentansprüche

1. Abdeckungsstruktur (10) für eine bordeigene Kamera (1) eines Kraftfahrzeugs, die gegenüber einer Scheibe (4) des Fahrzeugs positioniert ist, wobei die Abdeckungsstruktur eine Mehrzahl undurchsichtiger Wände (11-14) umfasst, die ein Volumen (15) definieren, das eine erste Öffnung (15a) aufweist, die dazu bestimmt ist, in der Verwendungsposition der Abdeckungsstruktur von der Scheibe (4) des Fahrzeugs verschlossen zu werden, und eine zweite Öffnung (15b), die dazu bestimmt ist, in der Verwendungsposition gegenüber einer Linse (2) der Kamera (1) gelegen zu sein, **dadurch gekennzeichnet, dass** mindestens eine Wand (11), die das Volumen (15) definiert, eine reflektierende Innenseite (11c) aufweist, die mit katadioptrischen Retroreflexionselementen (20) versehen ist, die ein einfallendes Lichtbündel in die Richtung reflektieren, aus der Letzteres kommt, unabhängig von dem Einfallswinkel des Bündels.

2. Abdeckungsstruktur (10) nach Anspruch 1, **dadurch gekennzeichnet, dass** die mindestens eine Wand, die die reflektierende Innenseite aufweist, eine Wand ist, die eine Fläche aufweist, die größer als die Fläche der anderen Wände der Abdeckungsstruktur ist, die das Volumen definieren.

3. Abdeckungsstruktur (10) nach Anspruch 1 oder 2, **dadurch gekennzeichnet, dass** die mindestens eine Wand, die die reflektierende Innenseite aufweist, ausgewählt ist unter:
- einer unteren Wand (11), die sich in der Verwendungsposition der Abdeckungsstruktur von einem unteren Teil der zweiten Öffnung des Volumens aus erstreckt, optional von einem unteren Rand einer Wand (14) aus, die die zweite Öffnung (15b) definiert,
- einer seitlichen Wand (12, 13), die sich entlang eines Rands der unteren Wand von einem seitlichen Teil der zweiten Öffnung (15b) des Volumens aus erstreckt, optional von einem seitlichen Rand einer Wand (14) aus, die die zweite Öffnung definiert,
- optional einer Wand (14), die die zweite Öffnung (15b) des Volumens definiert.

4. Abdeckungsstruktur (10) nach einem der Ansprüche 1 bis 3, **dadurch gekennzeichnet, dass** eine einzige Wand (11), die das Volumen (15) definiert, eine reflektierende Innenseite aufweist und dass die Abdeckungsstruktur einstückig aus geformtem Polymermaterial hergestellt ist.

5. Abdeckungsstruktur (10) nach einem der Ansprüche 1 bis 4, **dadurch gekennzeichnet, dass** die katadioptrischen Retroreflexionselemente (20) konkave Trieder aus rechtwinkligen Dreiecken mit orthogonalen Kanten sind.

6. Abdeckungsstruktur (10) nach einem der Ansprüche 1 bis 5, **dadurch gekennzeichnet, dass** sich die katadioptrischen Retroreflexionselemente (20) über die gesamte Fläche der Innenseite der mindestens einen Wand erstrecken.

7. Kraftfahrzeug, umfassend eine bordeigene Kamera (1), die mit einer Linse (2) ausgestattet ist, die gegenüber einer Scheibe (4) des Fahrzeugs gelegen ist, und eine Abdeckungsstruktur (10) nach einem der vorhergehenden Ansprüche, wobei die zweite Öffnung (15b) gegenüber der Linse (2) der Kamera gelegen ist und die Abdeckungsstruktur (10) an der Scheibe (4) befestigt ist, die die erste Öffnung (15a) verschließt.

## Claims

1. Cover structure (10) for an on-board camera (1) of a motor vehicle positioned facing a window (4) of the vehicle, said cover structure comprising a plurality of opaque walls (11-14) defining a volume (15) having a first opening (15a) intended to be closed by the window (4) of the vehicle in the position of use of the cover structure and a second opening (15b) intended to be situated facing a lens (2) of said camera (1) in the position of use, **characterized in that** at least one wall (11) defining said volume (15) has a reflective internal face (11c) provided with catadioptric retroreflection elements (20) reflecting an incident light beam in the direction from which the latter originates, whatever the angle of incidence of said beam.

2. Cover structure (10) according to Claim 1, **characterized in that** said at least one wall having the reflective internal face is a wall having a surface area larger than the surface area of the other walls of said cover structure defining said volume.

3. Cover structure (10) according to Claim 1 or 2, **characterized in that** said at least one wall having the reflective internal face is chosen from among:
- a lower wall (11) extending, in the position of use of the cover structure, from a lower part of the second opening of the volume, optionally from a lower edge of a wall (14) defining said second opening (15b),
- a lateral wall (12, 13) extending along an edge of the lower wall from a lateral part of the second opening (15b) of the volume, optionally from a lateral edge of a wall (14) defining said second opening,
- optionally a wall (14) defining the second opening (15b) of the volume.

4. Cover structure (10) according to any one of Claims 1 to 3, **characterized in that** a single wall (11) defining the volume (15) has a reflective internal face and **in that** the cover structure is produced from a piece made of moulded polymer material.

5. Cover structure (10) according to any one of Claims 1 to 4, **characterized in that** the catadioptric retroreflection elements (20) are concave trirectangular trihedra with orthogonal edge corners.

6. Cover structure (10) according to any one of Claims 1 to 5, **characterized in that** the catadioptric retroreflection elements (20) extend over the entire surface of the internal face of said at least one wall.

7. Motor vehicle comprising an on-board camera (1) equipped with a lens (2) situated facing a window (4) of the vehicle and a cover structure (10) according to any one of the preceding claims, wherein the second opening (15b) is situated facing the lens (2) of the camera and the cover structure (10) is fastened to the window (4) that closes the first opening (15a).
